# EUROPEAN PATENT APPLICATION

(11) **EP 4 446 771 A1**
(43) Date of publication of application: **16.10.2024**
(21) Application number: 21969792.7
(22) Date of filing: 31.12.2021
(51) Int. Cl.: G01S 7/481, G01S 17/02

(54) **SCANNING MODULE, DETECTION APPARATUS, AND TERMINAL DEVICE**

(71) Applicant: Huawei Technologies Co., Ltd., Shenzhen, Guangdong 518129 (CN)
(72) Inventor: LIU, Jun, Shenzhen, Guangdong 518129 (CN); ZHANG, Shaopeng, Shenzhen, Guangdong 518129 (CN); LU, Zuomin, Shenzhen, Guangdong 518129 (CN); YU, Anliang, Shenzhen, Guangdong 518129 (CN); WANG, Wei, Shenzhen, Guangdong 518129 (CN)
(74) Representative: Gill Jennings & Every LLP
(86) International application number: PCT/CN2021/143910
(87) International publication number: WO 2023/123447

(57) **Abstract**

A scanning module, a detection apparatus, and a terminal device are provided to resolve a problem of low detection accuracy in the conventional technology. This application may be applied to the fields such as autonomous driving, intelligent driving, and assisted driving. The scanning module includes m reflective surfaces that are of a polyhedron reflective component and that are adjacent in a first direction, where m is a positive integer. For a first reflective surface in the m reflective surfaces, the first reflective surface includes n reflective sub-surfaces, and an included angle between two adjacent reflective sub-surfaces is greater than 0° and less than 180°, where n is an even number greater than or equal to 4, and the n reflective sub-surfaces are adjacent in a second direction different from the first direction. Because detection light emitted to two adjacent reflective sub-surfaces is converged after being reflected by the two reflective sub-surfaces, a size of a light spot of the detection light reflected by the scanning module can be reduced, to reduce or even eliminate stray light reflected by another mechanical part or the like due to a large size of the light spot of the detection light, so that accuracy of the detection apparatus using the scanning module can be improved.

## Description

### TECHNICAL FIELD

This application relates to the field of scanning technologies, and in particular, to a scanning module, a detection apparatus, and a terminal device.

### BACKGROUND

With the development of science and technology, intelligent terminals such as intelligent transportation devices, smart home devices, robots, and vehicles are gradually entering people's daily life. A detection apparatus may sense a surrounding environment, so that the detection apparatus can identify and trace a moving target based on sensed environment information and identify a static target such as a lane line or a sign board, and can perform route planning by using a navigator, map data, and the like. Therefore, the detection apparatus plays an increasingly important role in an intelligent terminal.

During actual application, due to impact of stray light, accuracy of sensing the surrounding environment by the detection apparatus may be reduced. For example, the detection apparatus is a lidar (light detection and ranging, LiDAR). The lidar usually includes a transmitting module, a scanning module, a receiving module, and the like. Detection light transmitted by the transmitting module is propagated to a detection region by using the scanning module, an echo signal is obtained when a target in the detection region reflects the detection light, and the receiving module determines associated information of the target in the detection region based on the received echo signal, thereby implementing detection of the detection region. However, the echo signal received by the receiving module may include stray light, and consequently detection accuracy of the lidar is reduced.

In conclusion, how to reduce or even eliminate impact of stray light on a lidar is a technical problem that needs to be urgently resolved currently.

### SUMMARY

This application provides a scanning module, a detection apparatus, and a terminal device, to reduce or even eliminate stray light, improving detection accuracy of the detection apparatus based on the scanning module.

According to a first aspect, this application provides a scanning module. The scanning module includes a polyhedron reflective component, the polyhedron reflective component includes m reflective surfaces, and the m reflective surfaces are adjacent in a first direction, where m is a positive integer; for a first reflective surface in the m reflective surfaces, the first reflective surface includes n reflective sub-surfaces, and an included angle between two adjacent reflective sub-surfaces is greater than 0° and less than 180°, where n is an even number greater than or equal to 4, and the n reflective sub-surfaces are adjacent in a second direction different from the first direction.

Based on the foregoing solution, because the included angle between two adjacent reflective sub-surfaces is greater than 0° and less than 180°, incident light (for example, detection light from the transmitting module) emitted to the two adjacent reflective sub-surfaces converges after being reflected by the two adjacent reflective sub-surfaces, helping reduce a size of a light spot of the detection light reflected by the scanning module, to reduce or even eliminate stray light generated due to a large size of the light spot of the detection light. This helps improve accuracy of a detection apparatus using the scanning module. It can also be understood that, based on the above scanning module, transmit-receive isolation can be implemented.

In a possible implementation, the first direction is perpendicular to the second direction. For example, the first direction may be a rotation direction of the scanning module, and the second direction may be a direction perpendicular to the rotation direction of the scanning module.

In a possible implementation, when m is greater than 1, the first reflective surface is any one of the m reflective surfaces; or when m=1, the first reflective surface is the reflective surface.

In a possible implementation, the n reflective sub-surfaces include a first reflective sub-surface, a second reflective sub-surface adj acent to the first reflective sub-surface, a third reflective sub-surface adjacent to the second reflective sub-surface, and a fourth reflective sub-surface adjacent to the third reflective sub-surface, and the second reflective sub-surface is parallel to the fourth reflective sub-surface, and the first reflective sub-surface is parallel to the third reflective sub-surface.

The first reflective sub-surface is disposed to be parallel to the third reflective sub-surface, and the second reflective sub-surface is disposed to be parallel to the fourth reflective sub-surface. This helps reduce image rotation of the echo signal reflected by the scanning module.

Further, the n reflective sub-surfaces of the first reflective surface further include a fifth reflective sub-surface and a sixth reflective sub-surface adjacent to the fifth reflective sub-surface, the fifth reflective sub-surface, the third reflective sub-surface, and the first reflective sub-surface are parallel to each other, and the sixth reflective sub-surface, the fourth reflective sub-surface, and the second reflective sub-surface are parallel to each other.

The first reflective sub-surface, the third reflective sub-surface, and the fifth reflective sub-surface are disposed to be parallel, and the second reflective sub-surface, the fourth reflective sub-surface, and the sixth reflective sub-surface are disposed to be parallel. This helps further reduce image rotation of the echo signal reflected by the scanning module.

In a possible implementation, the n reflective sub-surfaces of the first reflective surface may be formed by reflective surfaces of a V-shaped reflective part.

Because a manufacturing process of the V-shaped reflective part is simple, a preparation process of the scanning module can be simplified by using the V-shaped reflective part.

In some embodiments, the V-shaped reflective part may be integrally formed. For example, the V-shaped reflective part may be integrally formed through moulding.

In another possible implementation, the n reflective sub-surfaces may be formed by reflective surfaces of a W-shaped reflective part.

In some embodiments, the W-shaped reflective part may be integrally formed. For example, the W-shaped reflective part may be integrally formed through moulding.

In still another possible implementation, the n reflective sub-surfaces may be formed by reflective surfaces of a sawtooth wave-shaped reflective part, where n is an even number greater than or equal to 6.

In some embodiments, the sawtooth wave-shaped reflective part may be integrally formed through single-point diamond turning (single-point diamond turning, SPDT) or moulding.

Alternatively, the n reflective sub-surfaces of the first reflective surface may be formed by any two or any three of the reflective surfaces of the V-shaped reflective part, the reflective surfaces of the W-shaped reflective part, or the reflective surfaces of the sawtooth wave-shaped reflective part.

In a possible implementation, a dividing plate is disposed in a middle of the polyhedron reflective component, and the dividing plate is configured to divide the polyhedron reflective component into two regions.

The dividing plate is disposed in the middle of the polyhedron reflective component, so that the scanning module may be divided into a transmitting region and a receiving region. A reflective sub-surface of the transmitting region is configured to reflect the detection light from the transmitting module, and a reflective sub-surface of the receiving region is configured to reflect the echo signal. In this way, the detection light and the echo signal can be further separated, so that interference of the detection light to the echo signal can be further reduced or even eliminated.

In a possible implementation, the scanning module further includes a support, and the m reflective surfaces are fastened around the support. Further, in some embodiments, the m reflective surfaces may be adhered to around support by using adhesive.

The m reflective surfaces are fastened around the support, so that a driving component drives the polyhedron reflective component to rotate.

According to a second aspect, this application provides a detection apparatus. The detection apparatus includes a transmitting module, a receiving module, and the scanning module in the first aspect or any one of the implementations in the first aspect. The transmitting module is configured to transmit detection light. The scanning module is configured to reflect the detection light to a detection region, and reflect an echo signal to a receiving module. The echo signal is obtained by reflecting the detection light by a target in the detection region. The receiving module is configured to receive the echo signal used to determine associated information of the target.

Based on the foregoing solution, because an included angle between two adjacent reflective sub-surfaces is greater than 0° and less than 180°, the transmitting module emits detection light to the two adjacent reflective sub-surfaces, and the detection light is reflected by the two adjacent reflective sub-surfaces and then converged, helping reduce a size of a light spot of the detection light reflected by the scanning module. In this way, stray light generated due to a large size of the light spot of the detection light can be reduced or even eliminated, without increasing a distance between the transmitting module and the receiving module, to reduce or even eliminate interference of the stray light to the echo signal. It can also be understood that, based on the mentioned detection apparatus, miniaturization of the detection apparatus can be implemented, and transmit-receive isolation can be implemented, so as to reduce interference of the detection light to the echo signal, and further improve detection accuracy of the detection apparatus.

In a possible implementation, the associated information of the target may include but is not limited to distance information of the target, an orientation of the target, a speed of the target, and/or grayscale information of the target.

In a possible implementation, the transmitting module may include H light source assemblies, where H is a positive integer, and the light source assembly is configured to transmit detection light.

In a possible implementation, the H light source assemblies may include a first light source assembly and a second light source assembly, and the first light source assembly and the second light source assembly may be linear light sources. The first light source assembly is configured to emit first detection light, and the second light source assembly is configured to emit second detection light.

Power of the detection light emitted by the transmitting module can be increased by using the two light source assemblies. In addition, line scanning may be implemented by using the linear light source.

Further, the detection apparatus may further include a light beam converging component, and the light beam converging component is configured to converge the first detection light and the second detection light.

In a possible implementation, the light beam converging component may be, for example, a light beam combining prism or a refraction prism.

By using the light beam combining prism, the first detection light and the second detection light may be converged (which may include but is not limited to intersecting) at a second position. In other words, a beam waist of the first detection light and a beam waist of the second detection light may overlap at the second position.

In a possible implementation, the transmitting module further includes a reflective mirror. The reflective mirror is configured to change a propagation direction of the second detection light, where the beam waist of the second detection light whose propagation direction is changed overlaps the beam waist of the first detection light at a first position.

By using the reflective mirror, positions of the first light source assembly and the second light source assembly may be flexibly disposed, helping further reduce a size of the detection apparatus.

In a possible implementation, the H light source assemblies include a third light source assembly, and the third light source assembly is a point light source.

In a possible implementation, the transmitting module further includes H collimating components, and one collimating component corresponds to one light source assembly.

Detection light emitted by a corresponding light source assembly may be collimated into collimating light by using the collimating component.

According to a third aspect, this application provides a terminal device. The terminal device includes a control apparatus and the detection apparatus in any one of the second aspect or the possible implementations of the second aspect. The control apparatus is configured to: receive associated information of that is of a target and that is from the detection apparatus, and plan a travel path based on the associated information of the target; or receive an echo signal from the detection apparatus, and determine associated information of a target based on the echo signal.

For technical effects that can be achieved in the third aspect, refer to descriptions of advantageous effects in the second aspect. Details are not described herein again.

### BRIEF DESCRIPTION OF DRAWINGS

FIG. 1a is a schematic diagram of a beam waist of a light beam according to this application;
FIG. 1b is a schematic diagram of an included angle between two adjacent surfaces according to this application;
FIG. 2a is a schematic diagram of a position at which a detection apparatus is installed in a vehicle according to this application;
FIG. 2b is a schematic diagram of another position at which a detection apparatus is installed in a vehicle according to this application;
FIG. 2c is an example schematic diagram of a possible application scenario of this application;
FIG. 3a is a schematic diagram of a structure of a transmit-receive off-axis detection apparatus according to this application;
FIG. 3b is a schematic diagram of a propagation optical path of detection light in a detection apparatus according to this application;
FIG. 3c is a schematic diagram of another propagation optical path of detection light in a detection apparatus according to this application;
FIG. 4a is a schematic diagram of a structure of a scanning module according to this application;
FIG. 4b is a schematic diagram of a structure of another scanning module according to this application;
FIG. 5a is a schematic diagram of a structure of a V-shaped reflective part according to this application;
FIG. 5b is a schematic diagram of a structure of a V-shaped reflective part according to this application;
FIG. 5c is a schematic diagram of a structure of a V-shaped reflective part according to this application;
FIG. 6a is a schematic diagram of a structure of a first reflective surface according to this application;
FIG. 6b is a schematic diagram of a structure of another first reflective surface according to this application;
FIG. 7a is a schematic diagram of a structure of still another first reflective surface according to this application;
FIG. 7b is a schematic diagram of a structure of yet another first reflective surface according to this application;
FIG. 7c is a schematic diagram of a structure of yet still another first reflective surface according to this application;
FIG. 8a is a schematic diagram of a structure of another scanning module according to this application;
FIG. 8b is a schematic diagram of a structure of still another scanning module according to this application;
FIG. 8c is a schematic diagram of a structure of yet another scanning module according to this application;
FIG. 9 is a schematic diagram of a structure of yet still another scanning module according to this application;
FIG. 10 is a schematic diagram of a structure of a detection apparatus according to this application;
FIG. 11a is a schematic diagram of a structure of another detection apparatus according to this application;
FIG. 11b is a schematic diagram of a propagation optical path of detection light in a detection apparatus according to this application;
FIG. 11c is a schematic diagram of a structure of still another detection apparatus according to this application;
FIG. 11d is a schematic diagram of a structure of yet another detection apparatus according to this application;
FIG. 11e is a schematic diagram of another propagation optical path of detection light in a detection apparatus according to this application;
FIG. 12 is a schematic diagram of a structure of a light source array according to this application;
FIG. 13 is a schematic diagram of a structure of a light homogenizing component according to this application;
FIG. 14 is a schematic diagram of a structure of a detection component according to this application;
FIG. 15 is a schematic diagram of a structure of a terminal device according to this application;
FIG. 16 is a schematic diagram of a structure of a vehicle according to this application; and
FIG. 17 is a schematic diagram of a structure of a windshield according to this application.

### DESCRIPTION OF EMBODIMENTS

The following describes in detail embodiments of this application with reference to accompanying drawings.

The following describes some terms in this application. It should be noted that these explanations are intended for ease of understanding by a person skilled in the art, but do not constitute a limitation on the protection scope claimed in this application.

### 1. Beam waist

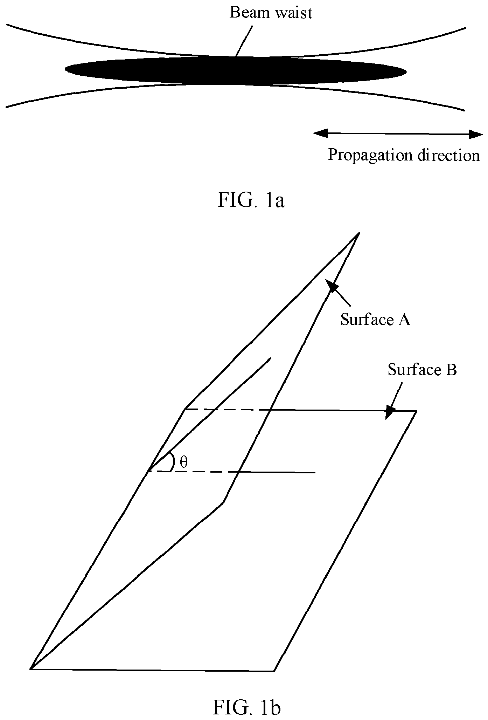

A beam waist is usually a position in which a beam has a minimum beam radius in a propagation direction. The beam radius at this position is referred to as a beam waist radius. Refer to FIG. 1a. A light beam converges at a beam waist position, a radius of the light beam is the smallest, and the light beam diverges gradually from the beam waist position toward two sides. Light intensity distribution of the beam in the propagation direction is usually the largest in a center. In a possible implementation, a small beam waist radius may be obtained by focusing a light beam by using a lens with a large beam waist aperture.

### 2. Moulding

Moulding is short for compression moulding, moulding is also referred to as compression molding. Moulding usually refers to a forming method of plastics or rubber materials in a closed mold cavity through heating and pressurizing.

### 3. Included angle between two adjacent surfaces

As shown in FIG. 1b, two adjacent surfaces are respectively a surface A and a surface B, and an included angle between the surface A and the surface B is represented by θ. It should be noted that the included angle between two adjacent surfaces refers to a smaller angle of two angles formed by the two adjacent surfaces. In this application, the two adjacent surfaces may be, for example, two adjacent reflective surfaces or two adjacent reflective sub-surfaces.

The foregoing describes some terms used in this application, and the following describes possible application scenarios of this application.

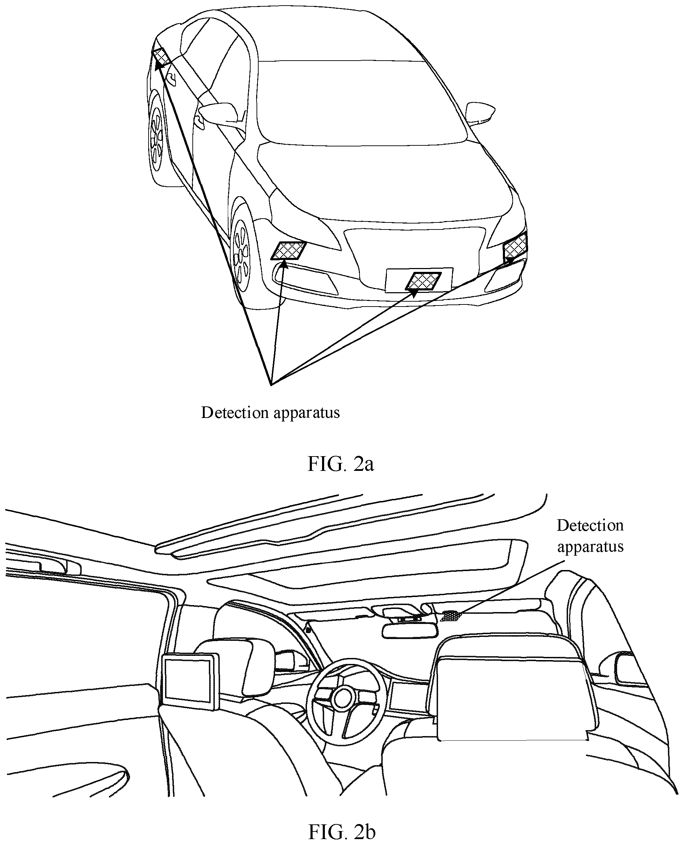

The scanning module in this application may be integrally in a detection apparatus, and the detection apparatus may be installed in a traffic tool, and specifically, may be installed in various positions at the traffic tool. For example, for the traffic tool, the detection apparatuses may be installed in any one or more directions of four directions: front, back, left, and right, to capture information about an environment around the vehicle. Refer to FIG. 2a. An example in which the traffic tool is a vehicle is used, and an example in which the detection apparatuses are installed in six directions of the vehicle: front, front left, front right, back left, back (not shown in FIG. 2a), or back right (not shown in FIG. 2a) is used. Alternatively, the detection apparatus may be installed inside the vehicle, for example, on a windshield. Refer to FIG. 2b. In some possible embodiments, the windshield can be used as a view window of the detection apparatus.

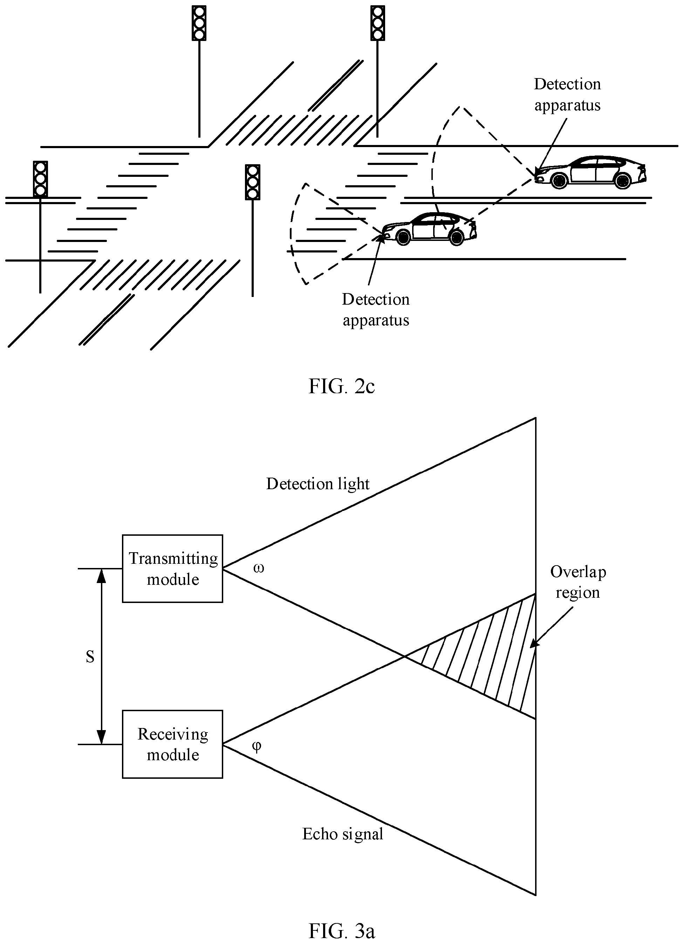

FIG. 2c is a schematic diagram of an example of a possible application scenario of this application. The detection apparatus may sense a sector region shown in a dashed box, and the sector region may be referred to as a detection region of the detection apparatus. The detection apparatus may obtain, in real time or periodically, longitude and latitude, a speed, and an orientation of a vehicle, or information (for example, a distance of a target, a moving speed of the target, or a posture of the target) about the target (for example, another surrounding vehicle or an obstacle) in a specific range. The detection apparatus or the vehicle may determine a position of the vehicle based on the obtained information, and may perform route planning and the like. For example, a position of the vehicle is determined through the longitude and the latitude. Alternatively, a traveling direction and a destination of the vehicle in a future period of time are determined through the speed and the orientation. Alternatively, a quantity of obstacles, density of the obstacles around the vehicle, and the like are determined through distances to surrounding objects. Further, optionally, with reference to a function of an advanced driving assistance system (advanced driving assistant system, ADAS), assisted driving, autonomous driving, or the like of the vehicle may be implemented. It should be understood that a principle of detecting a target by a detection apparatus is as follows: The detection apparatus transmits detection light in a specific direction. If a target exists in a detection region of the detection apparatus, the target may reflect the received detection light back to the detection apparatus (a reflected light may be referred to as an echo signal), and the detection apparatus determines information about the target based on the echo signal.

It should be noted that the foregoing application scenario is merely an example. The detection apparatus (the detection apparatus includes an optical receiving system provided in this application) provided in this application may be further applied to a plurality of other possible scenarios, and is not limited to the scenario shown in the foregoing example. For example, the detection apparatus may alternatively be installed on an unmanned aerial vehicle as an airborne radar. For another example, the detection apparatus may alternatively be installed in a road side unit (road side unit, RSU), and used as a road side traffic detection apparatus, to implement intelligent vehicle-road cooperative communication and the like. For another example, the detection apparatus may be installed on an automated guided vehicle (automated guided vehicle, AGV), and the automated guided vehicle, AGV is a transport vehicle equipped with an automatic navigation apparatus such as an electromagnetic or optical navigation apparatus, capable of traveling along a specified navigation path, and having security protection and various transferring and loading functions. For another example, the detection apparatus may alternatively be applied to scenarios such as telemedicine, remote training, multi-player game, and multi-player training, and this is not listed one by one herein. It should be understood that, the application scenarios described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as a new application scenario emerges.

Based on the foregoing content, the foregoing application scenario may be applied to the fields such as unmanned driving, autonomous driving, assisted driving, intelligent driving, networked vehicles, security monitoring, remote interaction, artificial intelligence, and surveying and mapping.

The following takes a transmit-receive off-axis detection apparatus as an example to describe a possible scenario in which stray light is generated in the detection apparatus.

FIG. 3a is a schematic diagram of a structure of a transmit-receive off-axis detection apparatus according to this application. The detection apparatus includes a transmitting module and a receiving module. Detection light transmitted by the transmitting module and an echo signal received by the receiving module pass through different paths. Based on the transmit-receive off-axis detection apparatus, the detection light transmitted by the transmitting module has a specific divergence angle ω, and the echo signal received by the receiving module also has a specific divergence angle ϕ. Due to space limitation of the detection apparatus, the detection light and the echo signal may partially overlap. Refer to the overlap (overlap) region in FIG. 3a.

Based on the detection apparatus shown in FIG. 3a, if any other mechanical part is in the overlap (overlap) region of the detection apparatus, the mechanical part may reflect the detection light emitted by the transmitting module, and a reflected detection light can be received by the receiving module, the receiving module cannot distinguish whether the received optical signal is the echo signal reflected by the target or the detection light reflected by the mechanical part. As a result, crosstalk (or interference) is caused by the detection light reflected by the mechanical part to an actual echo signal reflected by the target. The detection light reflected by the mechanical part is stray light. Further, because propagation time of the stray light is short, the detection apparatus may mistakenly detect the stray light as an echo signal reflected by a target that is close to the detection apparatus. Therefore, the stray light affects detection accuracy of the detection apparatus, and in particular, has a large impact in a scenario in which the detection apparatus is used for near-distance detection.

In still another possible scenario, because a reflective surface of the scanning module may be rough, have a scratch, or have a pit, after detection light transmitted by the transmitting module is emitted to the scanning module, the scanning module may scatter a part of the detection light. The scattered detection light cannot be emitted to the detection region, and form stray light in the detection apparatus. The stray light may also enter the receiving module, and therefore is determined by the receiving module as an echo signal reflected by an actual target, and detection accuracy of the detection apparatus is reduced.

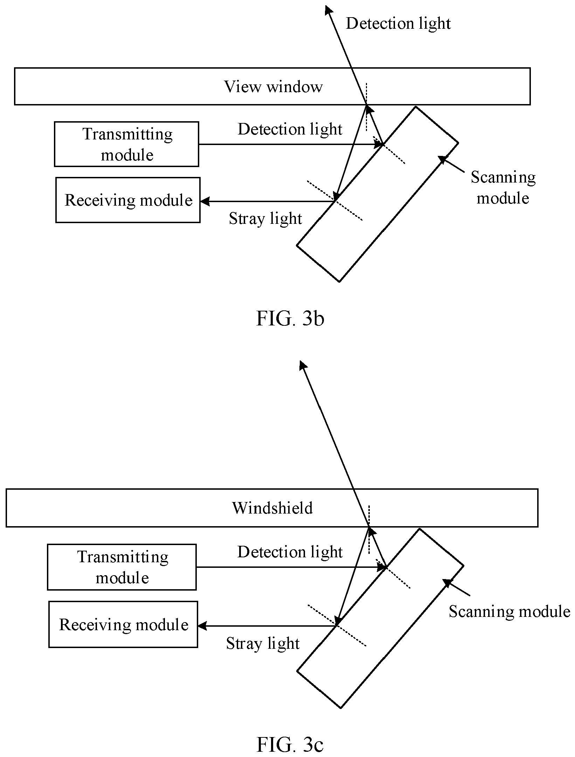

Refer to FIG. 3b. Detection light transmitted by the transmitting module is reflected to a view window by using the scanning module, and a large part of the detection light is transmitted to a detection region by using the view window, to implement scanning of the detection region. However, 100% transmission cannot be implemented by using the view window. Therefore, a small part of the detection light is reflected to the detection apparatus by the view window, and may be received by the receiving module. As a result, crosstalk is caused to an echo signal reflected by the target. Therefore, this part that is of the detection light and that is reflected by the view window is also referred to as stray light.

When the detection apparatus is installed inside the vehicle, for example, on a windshield (see FIG. 2b above), the windshield may be used as a view window of the detection apparatus. However, because the windshield is a strong scattering source, and transmittance of the windshield may not reach 100% (usually 75% to 85%), the windshield reflects the detection light emitted by the detection apparatus back to the detection apparatus. Refer to FIG. 3c. The detection light reflected back to the detection apparatus may be received by the receiving module, and causes crosstalk to an echo signal reflected back by an actual target. Therefore, the detection light scattered by the windshield is also referred to as stray light. The reason why the windshield is a strong scattering source may include but is not limited to the following content: (1) The windshield is a large window of non-optical quality, and cannot control light cleanness with high quality; and (2) a surface shape of the integrally formed windshield cannot reach an optical level (for example, a PV micron level), and each region in a forming process has a different bending degree, and consistency of a surface shape of the windshield is low.

It should be noted that the foregoing possible case in which stray light is generated is merely an example, and the stray light generated based on the detection light is not limited in this application.

Because the stray light causes interference to the echo signal (that is, light carrying effective information of the target), in a possible implementation, a distance H between the transmitting module and the receiving module may be increased, to isolate a transmitting optical path from a receiving optical path. However, increasing the distance H between the transmitting module and the receiving module increases a size of the detection apparatus, which is not conducive to miniaturization of the detection apparatus.

In view of the foregoing problem, this application provides a scanning module. The scanning module can implement transmit-receive isolation, so that crosstalk caused by stray light to an echo signal can be reduced or even eliminated. Further, when the scanning module is used in a detection apparatus, miniaturization of the detection apparatus is facilitated.

Based on the foregoing content, the following specifically describes the scanning module provided in this application with reference to the following description.

In this application, the scanning module may include a polyhedron reflective component. The polyhedron reflective component includes m reflective surfaces, and m is a positive integer. It may also be understood that the polyhedron reflective component may include one reflective surface, or may include two or more reflective surfaces. These m reflective surfaces are adjacent in a first direction. For a first reflective surface in the m reflective surfaces, the first reflective surface includes n reflective sub-surfaces, and an included angle between two adjacent reflective sub-surfaces is greater than 0° and less than 180°, where n is an even number greater than or equal to 4. It may also be understood that the first reflective surface includes at least four reflective sub-surfaces, for example, may include six reflective sub-surfaces, or eight reflective sub-surfaces. The n reflective sub-surfaces are adjacent in a second direction and the second direction is different from the first direction.

In a specific design, the m reflective surfaces may form continuous and closed reflective surfaces of the polyhedron reflective component; and/or the n reflective sub-surfaces may form one continuous reflective surface (that is, referred to as a first reflective surface) of the m reflective surfaces.

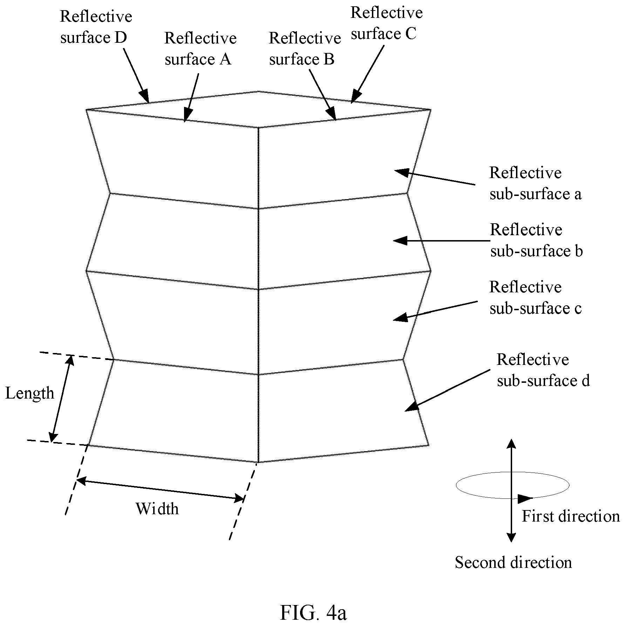

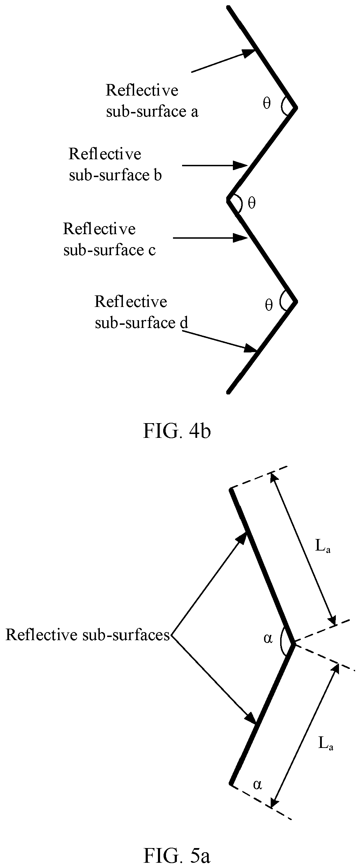

Refer to FIG. 4a, an example in which the polyhedron reflective component includes four first reflective surfaces in the first direction is used, and the four first reflective surfaces are a reflective surface A, a reflective surface B, a reflective surface C, and a reflective surface D. In the first direction, the reflective surface A is adjacent to the reflective surface B and the reflective surface D, the reflective surface B is adjacent to the reflective surface C and the reflective surface D in the first direction, the reflective surface C is adjacent to the reflective surface D and the reflective surface B in the first direction, and the reflective surface D is adjacent to the reflective surface A and the reflective surface C in the first direction. The first reflective surface may be any one of the reflective surface A, the reflective surface B, the reflective surface C, and the reflective surface D. For example, each first reflective surface includes four reflective sub-surfaces in the second direction, and the reflective sub-surfaces are a reflective sub-surface a, a reflective sub-surface b, a reflective sub-surface c, and a reflective sub-surface d. The reflective sub-surface a is adjacent to the reflective sub-surface b in the second direction, and the reflective sub-surface b is adjacent to the reflective sub-surface c in the second direction, the reflective sub-surface c is adjacent to the reflective sub-surface d in the second direction. An included angle θ between two adjacent reflective sub-surfaces is greater than 0° and less than 180°. With reference to FIG. 4b, an included angle between the adjacent reflective sub-surface a and the reflective sub-surface b is θ, an included angle between the adjacent reflective sub-surface b and the reflective sub-surface c is θ, and an included angle between the adjacent reflective sub-surface c and the reflective sub-surface d is θ. For example, an included angle between two adjacent reflective sub-surfaces in the first reflective surface may be 30°, 45°, 60°, 75°, 90°, 120°, 145°, or 150°. Further, optionally, the second direction may be perpendicular to the first direction. The first direction may be a rotation direction of the scanning module. The second direction may be a direction perpendicular to the rotation direction of the scanning module.

It should be noted that, that a plurality of reflective surfaces (or reflective sub-surfaces) are adjacent in a direction does not mean that each reflective surface is adjacent to another reflective surface. In the plurality of reflective surfaces, any two adjacent reflective surfaces are adjacent in a same direction, for example, the plurality of reflective surfaces are adjacent in a horizontal direction (or a vertical direction). With reference to FIG. 4a, that the reflective surface A, the reflective surface B, the reflective surface C, and the reflective surface D are adjacent means to be adjacent in the first direction, and that the reflective sub-surface a, the reflective sub-surface b, the reflective sub-surface c, and the reflective sub-surface d are adjacent means to be adjacent in the second direction.

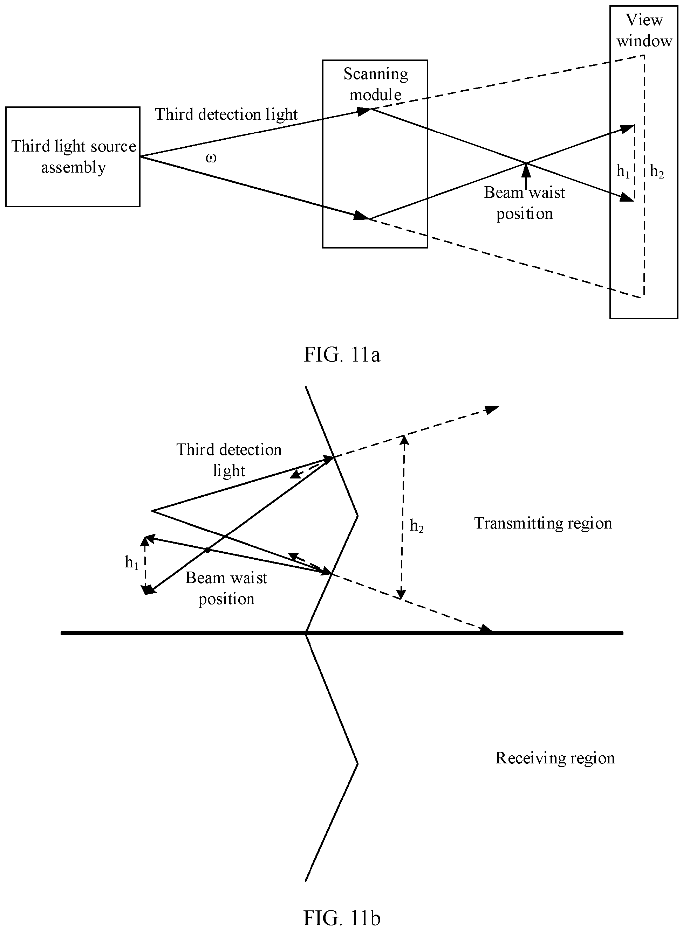

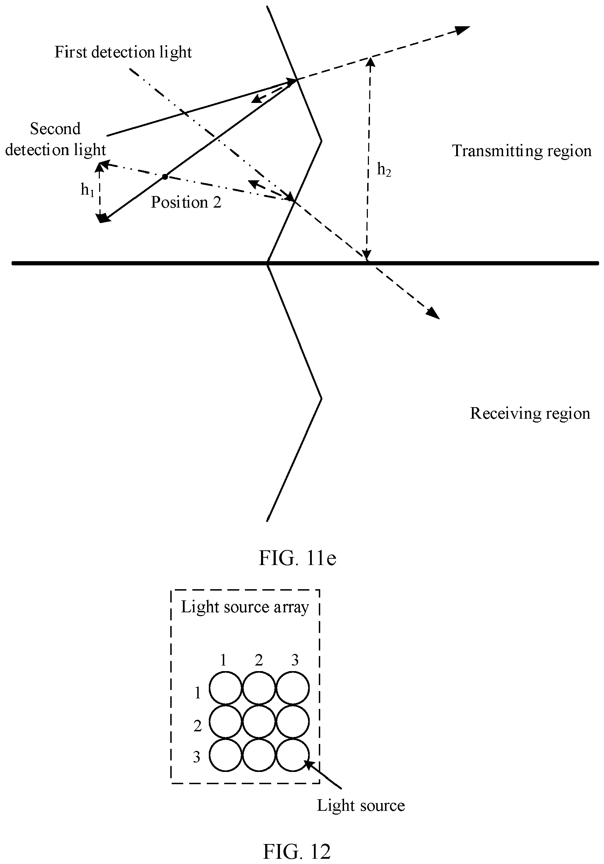

Based on the scanning module, because the included angle between two adjacent reflective sub-surfaces is greater than 0° and less than 180°, incident light (for example, detection light from the transmitting module) emitted to the two adjacent reflective sub-surfaces is reflected by the two adjacent reflective sub-surfaces and then converged, helping reduce a size of a light spot of the detection light reflected by the scanning module (refer to the following optical path in FIG. 11e or FIG. 11b). In this way, stray light reflected by another mechanical part or the like due to a large size of the light spot of the detection light can be reduced or even eliminated. Further, when the scanning module is used in the detection apparatus, with reference to FIG. 3a, the distance S between the transmitting module and the receiving module may not be increased. To be specific, this helps miniaturize the detection apparatus, and helps improve detection accuracy of the detection apparatus. It may also be understood that, that the foregoing scanning module is used in the detection apparatus can not only implement miniaturization of the detection apparatus, but also implement transmit-receive isolation, to reduce interference of the detection light to an echo signal, improving detection accuracy of the detection apparatus.

In a possible implementation, the first reflective surface may be any one of the m reflective surfaces of the polyhedron reflective component. For example, the polyhedron reflective component may include one reflective surface in the first direction, and the first reflective surface is the reflective surface included in the polyhedron reflective component. For another example, the polyhedron reflective component may include two reflective surfaces in the second direction, and the first reflective surface may be any one of the two reflective surfaces included in the polyhedron reflective component. It may also be understood that the two reflective surfaces included in the polyhedron reflective component may be both referred to as a first reflective surface.

In the following description, for ease of solution description, one reflective surface (referred to as a first reflective surface) in the m reflective surfaces is used as an example for description.

In a possible implementation, the n reflective sub-surfaces included in the first reflective surface may be reflective surfaces of a V-shaped reflective part, and/or reflective surfaces of a W-shaped reflective part, and/or reflective surfaces of a sawtooth wave-shaped reflective part. The following separately describes possible structures of the n reflective sub-surfaces included in the first reflective surface.

In a first structure, the n reflective sub-surfaces included in the first reflective surface are formed by reflective surfaces of n/2 V-shaped reflective parts.

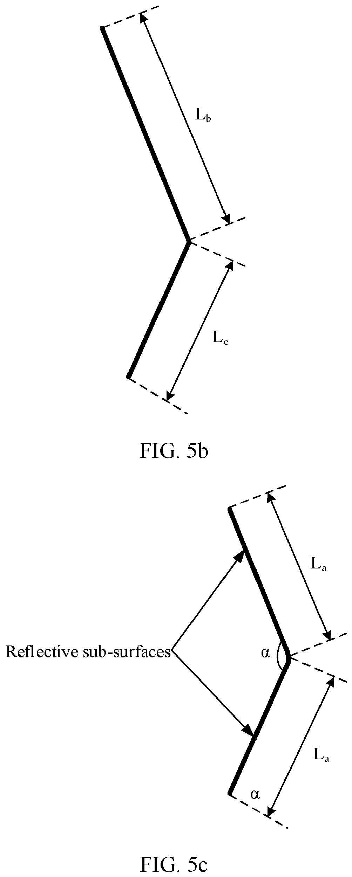

In a possible implementation, lengths of two reflective surfaces of the V-shaped reflective part may be the same. Refer to FIG. 5a. The lengths of the two surfaces of the V-shaped reflective part are both Lₐ. In another possible implementation, lengths of the two surfaces of the V-shaped reflective part may alternatively be different. Refer to FIG. 5b. The lengths of the two reflective surfaces of the V-shaped reflective part are respectively L_{b} and L_{c}. In this example, L_{b} is greater than L_{c}. It may be understood that L_{b} may alternatively be less than the L_{c}. Whether the lengths of the two reflective surfaces of the V-shaped reflective part are the same and which reflective surface has a larger length and which reflective surface has a smaller length are not limited in this application.

Further, optionally, widths (refer to FIG. 4a) of the two reflective surfaces of the V-shaped reflective part are usually the same. It may be understood that widths of the two reflective surfaces of the V-shaped reflective part may alternatively be different. This is not limited in this application.

To prevent incident light (for example, detection light or an echo signal) that is emitted to the reflective sub-surface from being leaked, the two reflective surfaces of the V-shaped reflective part are usually set to be greater than or equal to a size of a light spot of the incident light. Usually, the size of the light spot refers to an area of the light spot. For example, if the light spot is a line light spot, the size of the light spot is a length of the light spot x a width of the light spot. The length of the light spot may be, for example, 10 millimeters, and the width of the light spot may alternatively be, for example, 10 millimeters. With reference to FIG. 5a, Lₐ is usually set to be greater than or equal to the length and/or the width of the line light spot. With reference to FIG. 5b, the length L_{c} of the reflective surface that has a shorter length is usually set to be greater than or equal to the length and/or the width of the line light spot. For another example, if the light spot is an elliptic light spot, the size of the light spot is an area of the elliptic light spot. With reference to FIG. 5a, the Lₐ is usually set to be greater than or equal to a major axis of the elliptic light spot. With reference to FIG. 5b, the length L_{c} of the reflective surface that has a shorter length is usually set to be greater than or equal to a width of the elliptic light spot. For another example, the light spot is a circular light spot, and the size of the light spot is an area of the circular light spot. With reference to FIG. 5a, the Lₐ is usually set to be greater than or equal to a diameter of the circular light spot. With reference to FIG. 5b, the length L_{c} of the reflective surface that has a shorter length is usually set to be greater than or equal to a diameter of the circular light spot. It may be understood that the size of the light spot is related to a field of view of the detection apparatus. A specific value of the size of the light spot is not limited in this application.

It should be noted that, a part that connects the two reflective surfaces of the V-shaped reflective part may alternatively be arc-shaped. Refer to FIG. 5c.

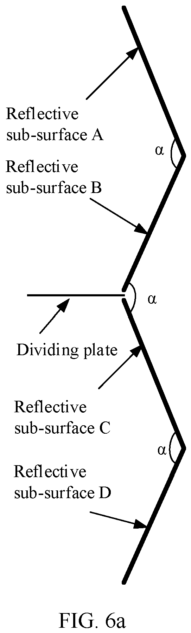

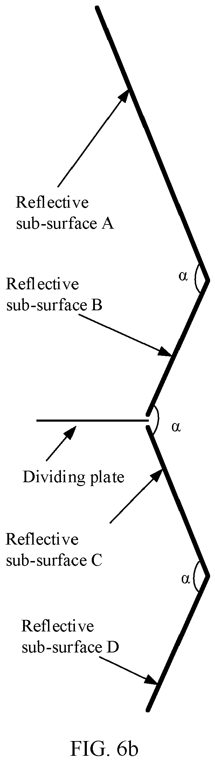

In a possible implementation, an included angle α (that is, an included angle formed by two surfaces of the V-shaped reflective part) of the two reflective surfaces of the V-shaped reflective part is an included angle θ between two adjacent reflective sub-surfaces. In other words, the included angle α between the two reflective surfaces of the V-shaped reflective part is greater than 0° and less than 180°, and specifically, for example, may be 30°, 45°, 60°, 75°, 90°, 120°, 145°, 150°, or the like. It may be understood that the included angle between the two adjacent reflective sub-surfaces includes an included angle α formed by two reflective surfaces of the V-shaped reflective part and an included angle α formed by one surface of one of the two adjacent V-shaped reflective parts and one surface of the other of the two adj acent V- shaped reflective parts. Refer to FIG. 6a or FIG. 6b below.

For example, the V-shaped reflective part may include but is not limited to a V-shaped reflective mirror or a V-shaped metal part. The V-shaped reflective mirror may be formed by plating a reflective film on V-shaped glass, V-shaped plastic, or the like. Specifically, the V-shaped reflective part may be, for example, integrally formed through moulding. A preparation process of the V-shaped reflective part that is integrally formed through moulding is simple.

In a possible implementation, the n/2 V-shaped reflective parts may be all the same, or may be different from each other, or may be partially the same. That the n/2 V-shaped reflective parts are the same includes but is not limited to that the reflective surfaces of the n/2 V-shaped reflective parts have a same length and a same included angle. That the n/2 V-shaped reflective parts are different includes but is not limited to that lengths and/or included angles of reflective surfaces of the n/2 V-shaped reflective parts are different.

FIG. 6a is a schematic diagram of a structure of a first reflective surface according to this application. In this example, the first reflective surface includes four reflective sub-surfaces, that is, n is equal to 4. The four reflective sub-surfaces included in the first reflective surface are reflective surfaces of two V-shaped reflective parts. In FIG. 6a, two same V-shaped reflective parts are used as an example, and lengths of two reflective surfaces of the V-shaped reflective part are also the same.

FIG. 6b is a schematic diagram of a structure of another first reflective surface according to this application. In this example, the first reflective surface includes four reflective sub-surfaces, that is, n is equal to 4. The four reflective sub-surfaces included in the first reflective surface are reflective surfaces of two V-shaped reflective parts. In FIG. 6a, two different V-shaped reflective parts are used as an example. Lengths of two reflective surfaces of one V-shaped reflective part are the same, and lengths of two reflective surfaces of the other V-shaped reflective part are different.

It should be noted that the two V-shaped reflective parts forming the four reflective sub-surfaces may alternatively be two same V-shaped reflective parts, and lengths of the two reflective surfaces of each V-shaped reflective part are different. This is not limited in this application.

To reduce image rotation of the echo signal reflected by the scanning module, a first reflective sub-surface is parallel to a third reflective sub-surface, a second reflective sub-surface is parallel to a fourth reflective sub-surface, and the first reflective sub-surface, the second reflective sub-surface, the third reflective sub-surface, and the fourth reflective sub-surface are four reflective sub-surfaces that are successively adjacent to each other and that are included in the first reflective surface. Alternatively, it may be understood that the n reflective sub-surfaces include a first reflective sub-surface, a second reflective sub-surface adjacent to the first reflective sub-surface in a second direction, a third reflective sub-surface adjacent to the second reflective sub-surface in the second direction, and a fourth reflective sub-surface adjacent to the third reflective sub-surface in the second direction. The second reflective sub-surface is parallel to the fourth reflective sub-surface, and the first reflective sub-surface is parallel to the third reflective sub-surface. Alternatively, it may be understood that an i^{th} reflective sub-surface in the first reflective surface is parallel to an (i+2)^{th} reflective sub-surface, the i^{th} reflective sub-surface is any one of the n reflective sub-surfaces, and the first reflective sub-surface is a top or bottom reflective sub-surface of the first reflective surface. With reference to FIG. 6a or FIG. 6b, the first reflective sub-surface may be a reflective sub-surface A, or may be a reflective sub-surface D. The reflective sub-surface A is parallel to the reflective sub-surface C, and the reflective sub-surface B is parallel to the reflective sub-surface D.

In some embodiments, a dividing plate is further disposed in a middle of the polyhedron reflective component, and the dividing plate is configured to divide the polyhedron reflective component into two regions. One region may be referred to as a transmitting region, and is configured to reflect detection light from the transmitting module. The other region may be referred to as a receiving region, and is configured to reflect a reflected echo signal that is reflected by a target. Specifically, the dividing plate may be disposed a middle of the n/2 V-shaped reflective parts, to divide the n reflective sub-surfaces into reflective sub-surfaces (including n/4 reflective sub-surfaces) of the transmitting region and reflective sub-surfaces (including n/4 reflective sub-surfaces) of the receiving region. For example, the dividing plate is disposed between the two V-shaped reflective parts. Refer to FIG. 6a or FIG. 6b.

The dividing plate is disposed in the middle of the polyhedron reflective component, so that the scanning module may be divided into a transmitting region and a receiving region. The reflective sub-surface of the transmitting region is configured to reflect the detection light from the transmitting module, and the reflective sub-surface of the receiving region is configured to reflect the echo signal. In this way, the detection light and the echo signal can be further separated, so that interference of the detection light to the echo signal can be further reduced or even eliminated.

In a second structure, the n reflective sub-surfaces included in the first reflective surface are formed by reflective surfaces of n/4 W-shaped reflective parts.

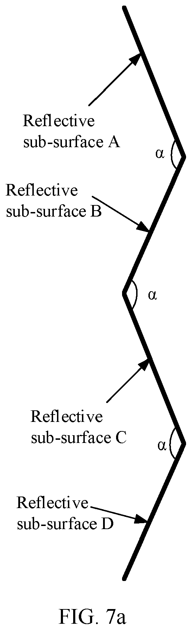

FIG. 7a is a schematic diagram of a structure of still another first reflective surface according to this application. In the example, an example in which the first reflective surface includes four reflective sub-surfaces is used, that is, n is equal to 4. The four reflective sub-surfaces included in the first reflective surface are four reflective surfaces of one W-shaped reflective part. A difference between FIG. 7a and FIG. 6a lies in that one W-shaped reflective part in FIG. 7a is integrally formed, and two V-shaped reflective parts are spliced in FIG. 6a.

In a possible implementation, lengths of the four reflective surfaces of the W-shaped reflective part may be the same. Refer to FIG. 7a; or lengths of the four reflective surfaces of the W-shaped reflective part may be different from each other; or lengths of the four reflective surfaces of the W-shaped reflective part may be partially the same and partially different. This is not limited in this application. It may be understood that widths of the two reflective surfaces of the W-shaped reflective part may be the same, or may be different. This is not limited in this application.

To prevent incident light (for example, detection light or an echo signal) emitted to the reflective sub-surface from being leaked, the four reflective surfaces of the W-shaped reflective part are usually set to be greater than or equal to a size of a light spot of the incident light. For the size of the light spot, refer to the foregoing related descriptions. Details are not described herein again.

It should be noted that, a part that connects two adjacent reflective surfaces of the W-shaped reflective part may alternatively be arc-shaped.

In a possible implementation, an included angle α between the two adjacent reflective surfaces of the W-shaped reflective part is an included angle θ between two adjacent reflective sub-surfaces. It may also be understood that the included angle α between the two adjacent reflective surfaces of the W-shaped reflective part may be greater than 0° and less than 180°, and specifically, for example, may be 30°, 45°, 60°, 75°, 90°, 120°, 145°, 150°, or the like. It may be understood that the included angle between the two adjacent reflective sub-surfaces includes an included angle α formed by two reflective surfaces of the W-shaped reflective part.

Specifically, the W-shaped reflective part may be, for example, integrally formed through moulding. For related descriptions of the moulding, refer to the foregoing descriptions. Details are not described herein again. For example, the W-shaped reflective part may include but is not limited to a W-shaped reflective mirror or a W-shaped metal part. The W-shaped reflective mirror may be formed by plating a reflective film on W-shaped glass, W-shaped plastic, or the like. The W-shaped reflective part is attached to a framework (refer to the following related description) for a small quantity of times.

In a possible implementation, the n/4 W-shaped reflective parts may be all the same, or may be different from each other, or may be partially the same and partially different. That the n/4 W-shaped reflective parts are all the same includes but is not limited to that the reflective surfaces of the n/4 W-shaped reflective parts have a same length and a same included angle. That the n/4 W-shaped reflective parts are different includes but is not limited to that a length of at least one of the reflective surfaces of the n/4 W-shaped reflective parts and/or an included angle formed by at least one pair of adj acent reflective surfaces of the n/4 W-shaped reflective part are/is different.

With reference to FIG. 7a, the reflective sub-surface A is parallel to the reflective sub-surface C, and the reflective sub-surface B is parallel to the reflective sub-surface D. This helps reduce image rotation of the echo signal reflected by the scanning module.

In a third structure, the n reflective sub-surfaces included in the first reflective surface are formed by reflective surfaces of p V-shaped reflective parts and reflective surfaces of q W-shaped reflective parts, where 2×p+4×q=n, and n is an even number greater than or equal to 6.

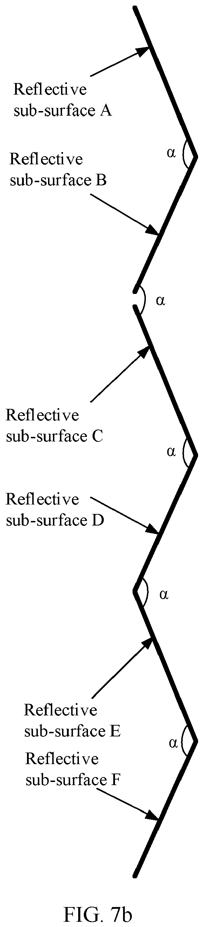

FIG. 7b is a schematic diagram of a structure of yet another first reflective surface according to this application. In this example, the first reflective surface includes six reflective sub-surfaces, that is, n is equal to 6. The six reflective sub-surfaces included in the first reflective surface are two reflective surfaces of one V-shaped reflective part and four reflective surfaces of one W-shaped reflective part. One reflective surface of the V-shaped reflective part is connected to one reflective surface of the W-shaped reflective part. For description of the V-shaped reflective part, refer to the description of the foregoing first structure. For a description of the W-shaped reflective part, refer to the description of the foregoing second structure. Details are not described herein again.

Further, a length of two reflective surfaces of the V-shaped reflective part may be the same as a length of two reflective surfaces of the four reflective surfaces of the W-shaped reflective part; or a length of one reflective surface of the V-shaped reflective part may be the same as a length of one reflective surface of the four reflective surfaces of the W-shaped reflective part. Alternatively, lengths of the two reflective surfaces of the V-shaped reflective part may be different from lengths of the four reflective surfaces of the W-shaped reflective part. This is not limited in this application.

In a possible implementation, the n reflective sub-surfaces included in the first reflective surface are divided into a first reflective sub-surface, a second reflective sub-surface, a third reflective sub-surface, a fourth reflective sub-surface, a fifth reflective sub-surface, and a sixth reflective sub-surface; the second reflective sub-surface is adjacent to the first reflective sub-surface in a second direction, the third reflective sub-surface is adjacent to the second reflective sub-surface in the second direction, the fourth reflective sub-surface is adjacent to the third reflective sub-surface in the second direction, the fifth reflective sub-surface is adjacent to the fourth reflective sub-surface in the second direction, and the sixth reflective sub-surface is adjacent to the fifth reflective sub-surface in the second direction; and the fifth reflective sub-surface, the third reflective sub-surface, and the first reflective sub-surface are parallel to each other, and the sixth reflective sub-surface, the fourth reflective sub-surface, and the second reflective sub-surface are parallel to each other. With reference to FIG. 7b, the reflective sub-surface A, the reflective sub-surface C, and the reflective sub-surface E are parallel to each other, and the reflective sub-surface B, the reflective sub-surface D, and the reflective sub-surface F are parallel to each other.

In a fourth structure, the n reflective sub-surfaces included in the first reflective surface are formed by reflective surfaces of a sawtooth wave-shaped reflective part, and the sawtooth wave-shaped reflective part includes n reflective surfaces, where n is an integer greater than or equal to 6.

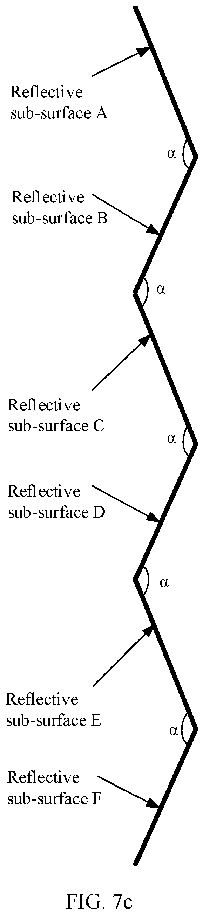

FIG. 7c is a schematic diagram of a structure of yet still another first reflective surface according to this application. In this example, the first reflective surface includes six reflective sub-surfaces, that is, n=6. The six reflective sub-surfaces included in the first reflective surface are six reflective surfaces of a sawtooth wave-shaped reflective part. FIG. 7c is described by using an example in which lengths of the reflective surfaces of the sawtooth wave-shaped reflective parts are the same. A difference between FIG. 7c and FIG. 7b lies in that, in FIG. 7b, a V-shaped reflective part and a W-shaped reflective part are spliced, and in FIG. 7c, the sawtooth wave-shaped reflective part is integrally formed, and specifically, may be integrally formed through SPDT.

In a possible implementation, lengths of the n reflective surfaces of the sawtooth wave-shaped reflective part may be the same, or may be partially the same and partially different, or may be different from each other. This is not limited in this application. Further, optionally, widths of the reflective surfaces of the sawtooth wave-shaped reflective part may be the same or may be different. This is not limited in this application.

It should be noted that, to prevent incident light (for example, detection light or an echo signal) emitted to the reflective sub-surface from being leaked, the n reflective surfaces of the sawtooth wave-shaped reflective part are usually set to be greater than or equal to a size of a light spot of the incident light. For a description of the size of the light spot, refer to the foregoing related descriptions. Details are not described herein again. Further, optionally, the widths (refer to FIG. 4a) of the n reflective surfaces of the sawtooth wave-shaped reflective part are usually the same, and are usually set to be greater than or equal to a size of a light spot of incident light in a first direction.

In a possible implementation, an included angle α between two adjacent reflective surfaces of the sawtooth wave-shaped reflective part is an included angle θ between two adjacent reflective sub-surfaces. It may also be understood that the included angle α between the two adjacent reflective surfaces of the sawtooth wave-shaped reflective part may be greater than 0° and less than 180°, specifically, for example, may be 30°, 45°, 60°, 75°, 90°, 120°, 145°, 150°, or the like.

In a possible implementation, the n reflective sub-surfaces included in the first reflective surface are divided into a first reflective sub-surface, a second reflective sub-surface, a third reflective sub-surface, a fourth reflective sub-surface, a fifth reflective sub-surface, and a sixth reflective sub-surface; the second reflective sub-surface is adjacent to the first reflective sub-surface in a second direction, the third reflective sub-surface is adjacent to the second reflective sub-surface in the second direction, the fourth reflective sub-surface is adjacent to the third reflective sub-surface in the second direction, the fifth reflective sub-surface is adjacent to the fourth reflective sub-surface in the second direction, and the sixth reflective sub-surface is adjacent to the fifth reflective sub-surface in the second direction; and the fifth reflective sub-surface, the third reflective sub-surface, and the first reflective sub-surface are parallel to each other, and the sixth reflective sub-surface, the fourth reflective sub-surface, and the second reflective sub-surface are parallel to each other. With reference to FIG. 7c, the reflective sub-surface A, the reflective sub-surface C, and the reflective sub-surface E are parallel to each other, and the reflective sub-surface B, the reflective sub-surface D, and the reflective sub-surface F are parallel to each other.

It may be understood that the n reflective sub-surfaces included in the first reflective surface may alternatively be other possible structures. For example, the reflective surfaces may be formed by reflective surfaces of a V-shaped reflective part and reflective surfaces of a sawtooth wave-shaped reflective part, where n is an integer greater than or equal to 8. For another example, the reflective surfaces may alternatively be formed by reflective surfaces of a W-shaped reflective part and reflective surfaces of a sawtooth wave-shaped reflective part, where n is an integer greater than or equal to 10, and this is not listed one by one herein. For another example, the reflective surfaces may alternatively be formed by reflective surfaces of a V-shaped reflective part, reflective surfaces of a W-shaped reflective part, and reflective surfaces of a sawtooth wave-shaped reflective part.

In a possible implementation, the polyhedron reflective component may further include a support (or referred to as a framework). The support is used to fasten m reflective surfaces. Specifically, the m reflective surfaces may be fastened around the support by using adhesive (or referred to as a glass patch) or the like. The m reflective surfaces are fastened around the support, so that a driving component drives the polyhedron reflective component to rotate.

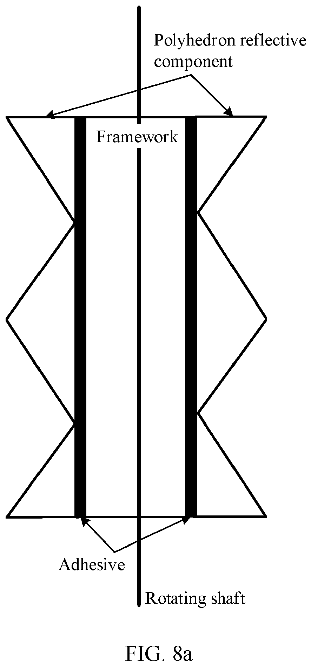

FIG. 8a is a schematic diagram of a structure of another scanning module according to this application. The scanning module includes a support and a polyhedron reflective component. In this example, the polyhedron reflective component includes two reflective surfaces, each reflective surface includes four reflective sub-surfaces, and the four reflective sub-surfaces include four reflective surfaces of one W-shaped reflective part. Further, the W-shaped reflective part may be fastened around (or referred to as two sides) the support by using adhesive.

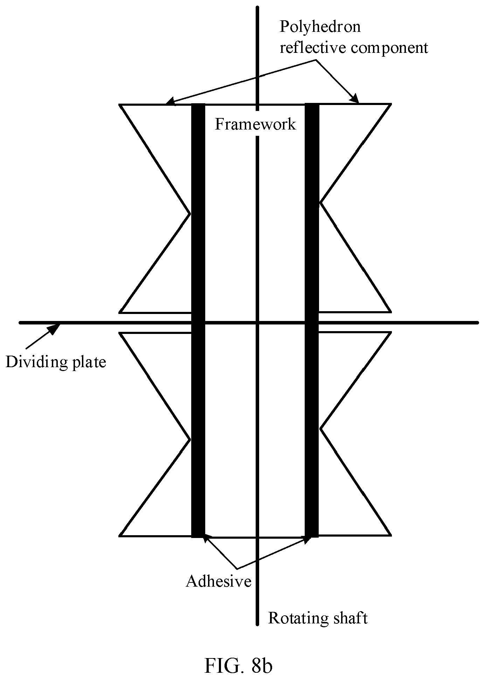

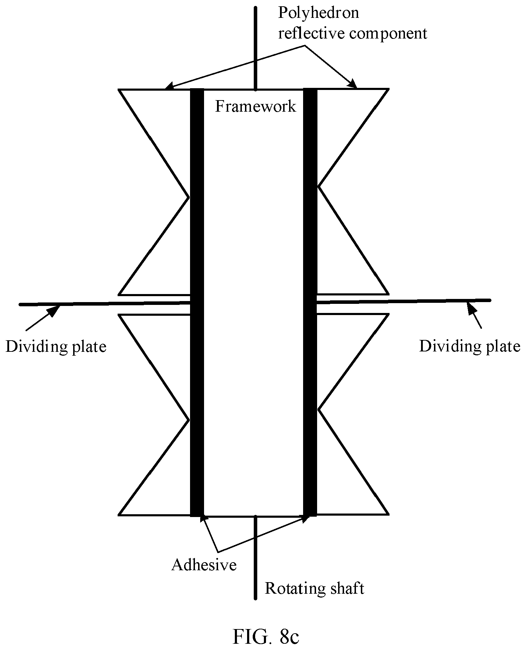

FIG. 8b is a schematic diagram of a structure of still another scanning module according to this application. The scanning module includes a support and a polyhedron reflective component. In this example, the polyhedron reflective component includes two reflective surfaces, each reflective surface includes four reflective sub-surfaces, and the four reflective sub-surfaces include reflective surfaces of two V-shaped reflective parts. Further, the V-shaped reflective part may be fastened around (or referred to at two sides) the support by using adhesive. The scanning module may further include a dividing plate that is disposed in a middle of the two V-shaped reflective parts. It may also understood that, the dividing plate is disposed in a middle of the polyhedron reflective component. It should be noted that the dividing plate may alternatively not pass through the framework, as shown in FIG. 8c, which is not limited in this application.

In a possible implementation, the scanning module further includes a driving component, to drive the scanning module to rotate. Specifically, the driving component may include a rotating shaft and a driver. The rotating shaft may be located on a central axis of the support. Refer to the description in FIG. 8a or FIG. 8b. It may be understood that the rotating shaft may alternatively be disposed at two ends of the support. Refer to FIG. 8c. A specific position of the rotating shaft is not limited in this application, and any position at which the scanning module can be driven to rotate falls within the protection scope of this application. The driving component may include but is not limited to a motor, a servo motor, or the like.

It should be noted that the driving component may be a part of the scanning module, or may be a structure independent of the scanning module.

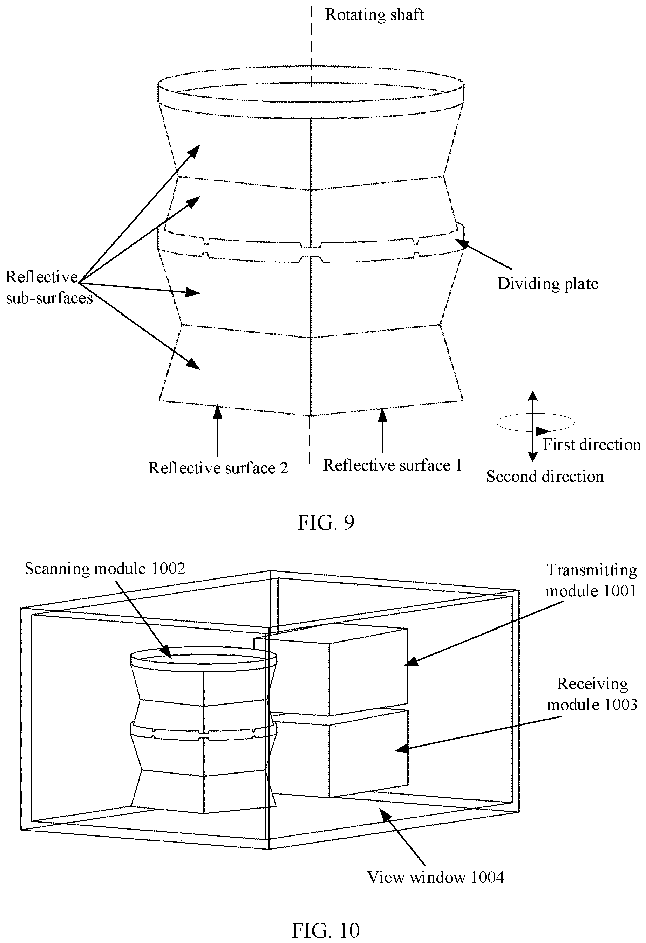

Based on the foregoing content, the following provides a specific implementation of the foregoing scanning module, to further understand a structure of the foregoing scanning module. FIG. 9 is a schematic diagram of a structure of still another scanning module according to this application. For example, the scanning module includes a tetrahedron reflective component. It may also be understood that four (that is, m=4) reflective surfaces included in the polyhedron reflective component in a first direction are respectively a reflective surface 1, a reflective surface 2, a reflective surface 3, and a reflective surface 4, and the four reflective surfaces are fastened around a framework. In the first direction, the reflective surface 1 is adjacent to the reflective surface 2 and the reflective surface 4, the reflective surface 2 is adjacent to the reflective surface 3 and the reflective surface 1, and the reflective surface 3 is adjacent to the reflective surface 2 and the reflective surface 4 respectively. The reflective surface 4 is adjacent to the reflective surface 3 and the reflective surface 1 respectively, and the reflective surface 3 is opposite to the reflective surface 1, and the reflective surface 4 is opposite to the reflective surface 2. The reflective surface 3 and the reflective surface 4 are not shown in FIG. 9. For example, each reflective surface includes four reflective sub-surfaces in a second direction. For example, the four reflective sub-surfaces are reflective surfaces of two V-shaped reflective parts. Further, a dividing plate is further disposed in a middle of the tetrahedron reflective component, and is configured to divide the tetrahedron reflective component into two regions, which may be referred to as a transmitting region and a receiving region. The transmitting region is corresponding to two reflective sub-surfaces, and the receiving region is corresponding to two reflective sub-surfaces. For a relationship between the reflective sub-surfaces and descriptions of the reflective sub-surfaces, refer to the foregoing related descriptions. Details are not described herein again.

Based on the foregoing described structure and function principle of the scanning module, this application may further provide a detection apparatus. FIG. 10 is a schematic diagram of a structure of a detection apparatus according to this application. The detection apparatus may include a transmitting module 1001, a scanning module 1002, and a receiving module 1003. The transmitting module 1001 is configured to transmit detection light. The scanning module 1002 is configured to reflect the detection light to a detection region and reflect an echo signal to the receiving module. The echo signal is obtained by reflecting the detection light by a target in the detection region. The receiving module 1003 is configured to receive an echo signal used to determine associated information of the target. For example, the associated information of the target may include but is not limited to distance information of the target, an orientation of the target, a speed of the target, and/or grayscale information of the target.

Further, in some embodiments, the detection apparatus may further include a view window 1004, and the view window 1004 is configured to isolate impact of an external environment on the detection apparatus. It should be noted that the detection apparatus may alternatively not include a view window. When the detection apparatus is installed on a windshield of a vehicle, the windshield may be used to replace a function of the view window. Alternatively, it may be understood that the windshield is used as a view window of the detection apparatus.

The scanning module 1002 may be the scanning module in any one of the foregoing embodiments. For details, refer to the foregoing related descriptions. Details are not described herein again. For the transmitting module 1001 and the receiving module 1003, refer to the following specific descriptions.

With reference to the foregoing FIG. 3b, the foregoing detection apparatus helps lower a requirement on scattering quality (for example, roughness and a local surface type) of the view window, to control difficulty in manufacturing of the detection apparatus when performance of the detection apparatus is ensured. Further, transmit-receive isolation further helps lower a requirement for roughness of a reflective surface of the scanning module.

The following separately describes the transmitting module and the receiving module shown in FIG. 10, to provide an example of a specific implementation solution. For ease of description, neither the transmitting module 1001 nor the receiving module 1003 in the following is described with a digital identifier.

### 1. Transmitting module

In a possible implementation, the transmitting module may include H light source assemblies, and H is a positive integer. For example, the light source assembly may be, for example, a vertical cavity surface emitting laser (vertical cavity surface emitting laser, VCSEL), an edge emitting laser (edge emitting laser, EEL), an all-solid-state semiconductor laser (diode pumped solid state laser, DPSS), or an optical fiber laser. The EEL may directly emit a line light beam, and the VCSEL, the DPSS, or the fiber laser may obtain the line light beam through optical shaping.

The following shows two possible structures of the light source assembly as an example.

Structure A: The light source assembly is a point light source.

In a possible implementation, H light source assemblies may include a third light source assembly, and the third light source assembly is a point light source. Third detection light emitted by the third light source assembly of the point light source has a specific divergence angle ω. It can be understood that a light spot formed by the third detection light is a circular light spot or an elliptic light spot. In the following FIG. 11a, that a light spot formed by the third detection light is a circular light spot is used as an example for description.

FIG. 11a is a schematic diagram of a structure of another detection apparatus according to this application. For example, a transmitting module in the detection apparatus includes a third light source assembly. An example in which reflective surfaces of two V-shaped reflective parts are used as reflective surfaces of a polyhedron reflective component included in the scanning module is used. FIG. 11a shows only an optical path of a transmitting region of the scanning module. After the third detection light emitted by the third light source assembly is converged by the scanning module in any one of the foregoing embodiments, a diameter of a light spot formed on the view window is h1. In other words, a beam waist of the third detection light reflected by the scanning module is at a position 1 (that is, a second position). If the scanning module is a scanning module in the conventional technology, a diameter of a light spot formed on the view window is h2. With reference to an actual optical path in FIG. 11b and an equivalent optical path in FIG. 1 1a, a diameter of a light spot formed by the third detection light on the view window may be reduced by using the foregoing detection apparatus, so that stray light generated by reflection by another mechanical part or the like due to a large light spot of the detection light can be reduced or even eliminated.

It should be noted that, if the light source assembly is a point light source, the V-shaped reflective part may be the V-shaped reflective part shown in FIG. 5c.

Structure B: The light source assembly is a linear light source.

In one possible implementation, a transmitting module may include a first light source assembly and a second light source assembly. The first light source assembly and the second light source assembly are linear light sources. The linear light source may include, for example, but is not limited to, a light source array (M×N), where M is an integer greater than 1, and N is a positive integer, or M is a positive integer, and N is an integer greater than 1.

FIG. 12 is a schematic diagram of a structure of a light source array according to this application. In this example, M=N=3 is used as an example, that is, the light source array includes 3×3 light sources. The light source array may be gated by row based on time division or by column based on time division. Row-based time-division gating means that one row in the light source array is gated at a same moment. Column-based time division gating means that one column in the light source array is gated at a same moment. For example, one row is gated at a same moment. A first row in the light source array is gated at a first moment, a second row in the light source array is gated at a second moment, and a third row in the light source array is gated at a third moment. Detection light emitted by one row of light sources gated at each moment is a line light beam. It should be noted that the foregoing provided shape of the light source is merely an example, and this is not limited in this application. For example, the shape of the light source may be a square, an ellipse, or another possible shape.

The light source array provided in FIG. 12 is merely an example. A quantity of rows and a quantity of columns included in the light source array are not specifically limited in this application. For example, the light source array may be a light source array of one row and a plurality of columns, or may be a light source array of a plurality of rows and one column, which is not listed one by one herein.

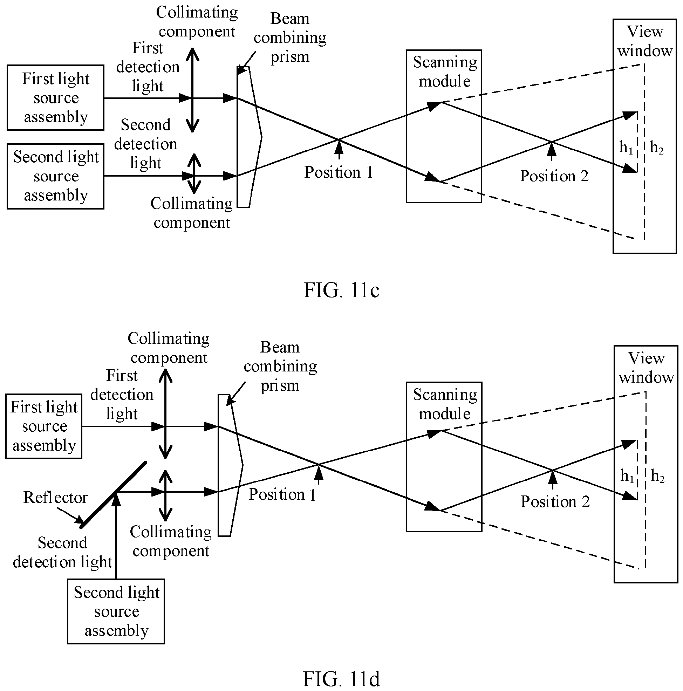

FIG. 11c is a schematic diagram of a structure of still another detection apparatus according to this application. For example, the transmitting module in the detection apparatus includes two light source assemblies, which are respectively referred to as a first light source assembly and a second light source assembly. An example in which reflective surfaces of two V-shaped reflective parts are used as reflective surfaces of a polyhedron reflective component included in the scanning module is used. FIG. 11c shows only an optical path of a transmitting region of the scanning module. The first light source assembly and the second light source assembly are linear light sources. For details, refer to the foregoing related descriptions of the linear light sources. The first light source assembly is configured to emit first detection light, and the second light source assembly is configured to emit second detection light. Both the first detection light and the second detection light are line light beams. One line in FIG. 11c represents one line of detection light.

Further, the transmitting module may further include a light beam converging component, configured to converge (which may include but is not limited to intersecting) the first detection light and the second detection light, and the converged detection light is a line light beam. In other words, a beam waist of the first detection light and a beam waist of the second detection light overlap at a position 1 (that is, a second position), that is, the position 1 is a position at which the beam waist of the first detection light and the beam waist of the second detection light overlap. The light beam converging component may be, for example, a light beam combining prism or a refraction prism. In FIG. 11c, a light beam combining prism is used as an example of the light beam converging component. It may also be understood that the first detection light and the second detection light may be received for the first time by using the light beam converging component. The first detection light and the second detection light diverge from the position 1, and may be converged at the position 2 after being reflected by two reflective sub-surfaces corresponding to the transmitting region of the scanning module, so that light spots of the first detection light and the second detection light that are converged on a windshield or a view window are small. In other words, a beam waist of the first detection light and a beam waist of the second detection light may overlap at the position 2 (that is, a first position) after the first detection light and the second detection light that are divergent are reflected by the scanning module. A specific position of the first position may be adjusted based on a value of a divergence angle ω.

In a possible implementation, the transmitting module may further include a reflective mirror. The reflective mirror is configured to change a propagation optical path of the second detection light, and a beam waist of the second detection light whose propagation optical path is changed overlaps the beam waist of the first detection light at a first position. Refer to FIG. 11d, a position 2 is the first position at which the beam waist of the second detection light whose propagation optical path is changed overlaps the beam waist of the first detection light. The optical path of the first detection light is also referred to as a straight-through optical path, and the optical path of the second detection light may also be referred to as a side-pass optical path. An optical path of the second detection light reflected by the reflective mirror is consistent with a direction of emitting the first detection light.

It should be noted that, for actual optical paths of the first detection light and the second detection light in the scanning module in FIG. 11c and FIG. 11d, refer to the following FIG. 11e. It may be understood that reflection of the first detection light and the second detection light on the corresponding reflective sub-surface satisfies a reflection law. Based on the reflection law, the first detection light and the second detection light may converge at the position 2 after being reflected by the scanning module.

In a possible implementation, the transmitting module may further include at least one collimating component, and one collimating component corresponds to one light source assembly. With reference to FIG. 11c, the collimating component may be, for example, a collimating mirror, and specifically, may be a collimating lens or a curved reflective mirror. The collimating component is configured to collimate the detection light emitted by the corresponding light source assembly into parallel light. For example, the first light source assembly corresponds to a first collimating component, and the first collimating component is configured to collimate the first detection light into collimating light; and the second light source assembly corresponds to a second collimating component, and the second collimating component is configured to collimate the second detection light into collimating light.

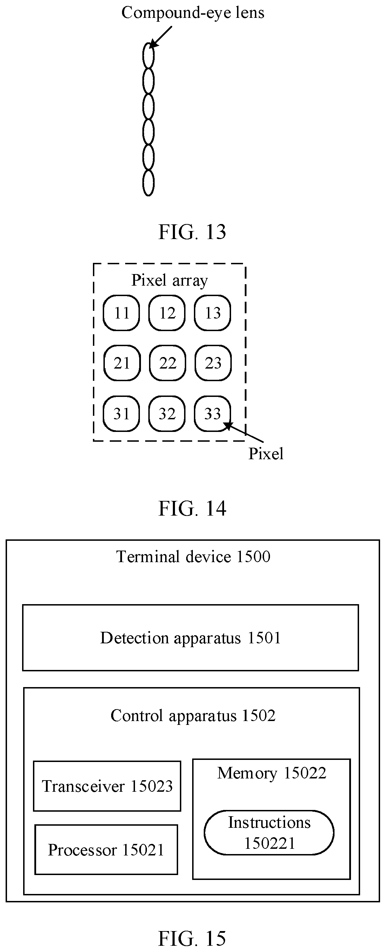

Further, optionally, the transmitting module may further include a light homogenizing component (homogenizer, HOM). The light homogenizing component is configured to homogenize detection light (for example, the first detection light and the second detection light). The light homogenizing component may be, for example, a compound-eye lens (refer to FIG. 13) including a series of (for example, two or more) lenses (or referred to as sub-eyes), to reduce a divergence angle of the detection light, so that the detection light emitted to the scanning module becomes more homogenized. Specifically, the light homogenizing component may be located between the light source assemblies and the light beam converging component. It should be noted that the light homogenizing component may alternatively be disposed at another possible position. A specific position of the light homogenizing component is not limited in this application.

It should be noted that a quantity of lenses included in the compound-eye lens shown in FIG. 13 is merely an example. In this application, the compound-eye lens may include more lenses than the lenses shown in FIG. 13, or may include fewer lenses than the lenses shown in FIG. 13. This is not limited in this application. It should be understood that more sub-eyes included in the compound-eye lens indicate better light homogenizing effect. In addition, there may be one or more compound-eye lenses. This is not limited in this application either. In addition, the light homogenizing component shown in FIG. 13 is merely an example. In this application, any structure that can implement light homogenizing of the detection light falls within the protection scope of this application. For example, the light homogenizing component may be, for example, a light rod.

It may be understood that, if the first detection light and the second detection light do not leak light in the second direction after being homogenized by the light homogenizing component, that is, the first detection light and the second detection light may be fully propagated to the scanning module, the detection apparatus may not include the light beam converging component.

### 2. Receiving module

In a possible implementation, the receiving module may include a detection component. The detection component is specifically configured to perform optical-to-electrical conversion on an echo signal, to obtain an electrical signal used to determine associated information of a target.

FIG. 14 is a schematic diagram of a structure of a detection component according to this application. For example, the detection component is a pixel array, and the pixel array includes 3×3 pixels. In a possible implementation, the pixel array may be gated by row based on time division or by column based on time division. Row-based time-division gating means that at least one row in a pixel array is gated at a same moment. Column-based time division gating means that at least one column in a pixel array is gated at a same moment. It should be noted that the foregoing provided shape of the pixel is merely an example, and this is not limited in this application. For example, the shape of the pixel may be a square, an ellipse, or another possible shape.

The pixel array provided in FIG. 14 is merely an example. A quantity of rows and a quantity of columns included in the pixel array are not limited in this application. For example, the pixel array may alternatively be a pixel array of one row and a plurality of columns, or may be a pixel array of a plurality of rows and one column, which is not listed one by one herein.

With reference to the light source array in FIG. 12, for example, one row is gated at a same moment. At a first moment, a first row in the pixel array is gated, and a first row in the light source array is gated. At a second moment, a second row in the pixel array is gated, and a second row in the light source array is gated. At a third moment, a third row in the pixel array is gated, and a third row in the light source array is gated. For example, a column in the pixel array is gated at a same moment. At a first moment, a first column in the pixel array is gated, and a first column in the light source array is gated. At a second moment, a second column in the pixel array is gated, and a second column of light sources in the light source array is gated. At a third moment, a third column in the pixel array is gated, and a third column in the light source array is gated.

For example, the detection component may be, for example, a photoelectric detector (photoelectric detector, PD), a P-typed semiconductor-intrinsic layer-N-type semiconductor (positive intrinsic negative, PIN) photodiode (also referred to as a PIN-node diode), or an avalanche photodiode (avalanche photodiode, APD), or may be the foregoing pixel array. A pixel in the pixel array may be, for example, one or more single-photon avalanche diodes (single-photon avalanche diode, SPAD), or silicon photomultipliers (silicon photomultiplier, SiMP), or PIN-typed photodiodes, or an APD.

It should be noted that the receiving module may further include another possible structure, for example, a receiving optical lens. The receiving optical lens includes at least one lens, and the lens in the receiving optical lens may be a single spherical lens, or may be a combination of a plurality of spherical lenses (for example, a combination of concave lenses, a combination of convex lenses, or a combination of a convex lens and a concave lens). Alternatively, the receiving optical lens may be non-rotationally symmetric. For example, a lens in the receiving optical lens may be a single aspheric lens, or a combination of a plurality of aspheric lenses. The combination of a plurality of spherical lenses and/or the combination of a plurality of aspheric lenses helps improve image quality of the detection apparatus and reduce aberration of an optical image-forming system. It should be understood that there are many different types of convex lenses and concave lenses, for example, convex lenses include double convex lenses, flat convex lenses, and concave convex lenses, concave lenses include double concave lenses, flat concave lenses, and concave convex lenses.

In a possible implementation, a material of the lens in the receiving optical lens may be an optical material such as glass, resin, or crystal. When the material of the lens is resin, a weight of the detection apparatus is reduced. When the material of the lens is glass, this helps further improve image-forming quality of the detection apparatus. Further, to effectively suppress temperature drift, the receiving optical lens includes at least one lens made of a glass material.

In a possible implementation, the detection apparatus may further include a control module. The control module is configured to plan a driving route based on determined associated information of a target, for example, avoid an obstacle on a path on which the vehicle is to travel, or implement autonomous driving of the vehicle. Alternatively, the control module may be configured to receive an echo signal from the detection apparatus, and determine the associated information of the target based on the echo signal.

Further, optionally, the control module may be further configured to control a driving component to drive the scanning module to rotate. Specifically, the control module may send a control signal to the driving component of the scanning module, to control the scanning module to rotate. Further, the control module may further send a control signal to the detection component, to control the detection component to process the received echo signal. Further, the detection module may further send a control signal to the light source assembly, to control the light source assembly to transmit the detection light, which is not listed one by one herein.

For example, the control module may include, for example, one or more processing units. The processing unit may be, for example, a central processing unit (central processing unit, CPU), or may be another general purpose processor, a field programmable gate array (field programmable gate array, FPGA), an application processor (application processor, AP), a graphics processing unit (graphics processing unit, GPU), an image signal processor (image signal processor, ISP), a controller, a digital signal processor (digital signal processor, DSP), an application-specific integrated circuit (application-specific integrated circuit, ASIC), or another programmable logic device, a transistor logic device, a hardware component, or any combination thereof. The general purpose processor may be a microprocessor, or may be any conventional processor. Different processing units may be independent components, or may be integrally formed into one or more processors.

Based on the foregoing described architecture and function principles of the detection apparatus, this application may further provide a terminal device.

FIG. 15 is a schematic diagram of a structure of a terminal device according to this application. The terminal device 1500 may include the detection apparatus 1501 in any one of the foregoing embodiments and a control apparatus 1502. The detection apparatus 1501 may send associated information of a determined target to the control apparatus 1502. The control apparatus 1502 is used to plan a driving route based on the received associated information of the target, and for example, avoid an obstacle on the driving route.

The detection apparatus 1501 may be, for example, a lidar, and may sense a target in a surrounding environment of the terminal device by using detection light. In some embodiments, in addition to sensing the target, the lidar may be further configured to sense a speed and/or a moving direction of the target. The detection apparatus 1501 may be the detection apparatus in any one of the foregoing embodiments. For details, refer to the foregoing related description, and details are not described herein again.

Some or all functions of the terminal device 1500 are controlled by the control apparatus 1502. The control apparatus 1502 may include at least one processor 15021, and the processor 15021 executes instructions 150221 stored in a non-transitory computer-readable medium such as a memory 15022. Further, the terminal device may further include a transceiver 15023. For example, the transceiver 15023 may be configured to receive the associated information of the target from the detection apparatus 1501. Alternatively, the control apparatus 1502 may be a plurality of computing devices that control individual components or subsystems of the terminal device 1500 in a distributed manner.

The processor 15021 may be a circuit having a signal (or data) processing capability. In an implementation, the processor may be a circuit having an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). Although FIG. 15 functionally illustrates a processor, a memory, and other components of the control apparatus 1502 in a same block, a person of ordinary skill in the art should understand that the processor and the memory may not be actually stored in a plurality of processors or memories in a same physical housing. For example, the memory may be a hard disk drive or another storage medium located in a housing different from that of the control apparatus 1502. For another example, the processor may be far away from a vehicle but may perform wireless communication with the vehicle.

In some embodiments, the memory 15022 may include instructions 150221 (for example, program logic), and the instructions 150221 may be read by the processor 15021 to perform various functions of the terminal device 1500, including the foregoing described functions. The memory 15022 may also include additional instructions, including instructions for sending data to another system (such as a propulsion system) of the terminal device, receiving data from the system, interacting with the system, and/or controlling the system. In addition to the instructions 150221, the memory 15022 may further store data, for example, data detected by the detection apparatus 1501, a position, a direction, a speed, and other information of the vehicle.

For example, the memory may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium.

It should be noted that the functional framework of the terminal device shown in FIG. 15 is merely an example. In another example, the terminal device 1500 may include more, fewer, or different apparatuses (or systems), and each apparatus may include more, fewer, or different components. In addition, the shown apparatuses and structures may be combined or split in any manner. This is not specifically limited in this application.

For example, the terminal device may be, for example, a traffic device. The traffic device may be, for example, a vehicle (for example, an unmanned vehicle, a smart vehicle, an electric vehicle, or a digital vehicle), a ship, a robot, a mapping device, an unmanned aerial vehicle, a smart home device (for example, a robot vacuum cleaner), an intelligent manufacturing device (for example, an industrial device), an intelligent transportation device (for example, an automated guided vehicle (automated guided vehicle, AGV), an unmanned transport vehicle, or a truck). The AGV refers to a transport vehicle equipped with an automated navigation apparatus such as an electromagnetic or optical device, capable of driving along a specified navigation path, and having security protection and various load transfer functions.

The following uses an example in which the terminal device is a vehicle for description.

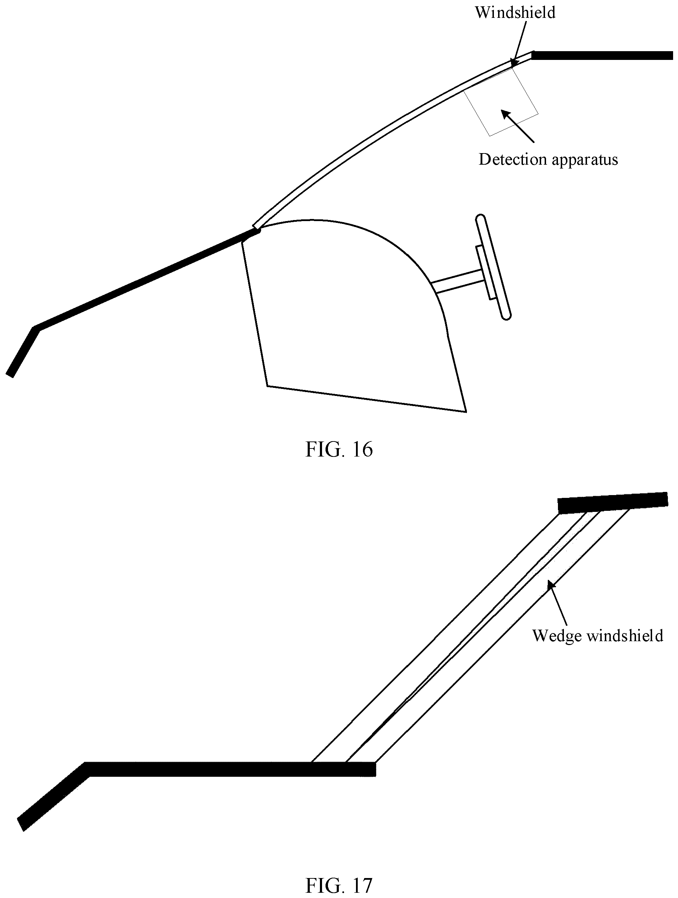

FIG. 16 is a schematic diagram of a structure of a vehicle according to this application. The vehicle may include a windshield and the detection apparatus in any one of the foregoing embodiments. In this example, the detection apparatus is installed on the windshield. The windshield can be used as a view window of the detection apparatus. Specifically, the detection apparatus may be bonded to the windshield, and the windshield is used as the view window of the detection apparatus. In order to prevent the windshield from being broken after being hit, the windshield usually includes two layers of glass and a layer of polyvinyl butyral (polyvinyl butyral, PVB) material sandwiched between the two layers of glass.

It should be understood that the vehicle structure shown in FIG. 16 is merely an example. The vehicle may further include another component, for example, a steering wheel, a memory, and a wireless communications apparatus. This is not limited in this application.

In a possible implementation, the windshield may be, for example, a wedge-shaped windshield (refer to FIG. 17), or may be a planar windshield (refer to FIG. 16). This is not limited in this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in this application, "uniformity" does not mean absolute uniformity, and an engineering error may be allowed. "Vertical" does not mean absolute verticality, but allows specific engineering errors. "At least one" indicates one or more, and "a plurality of" indicates two or more. "And/or" describes an association relationship between associated objects, and represents that three relationships may exist. For example, A and/or B may represent the following cases: Only A exists, both A and B exist, and only B exists, where A and B may be singular or plural. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural. In the text descriptions of this application, the character "/" usually indicates an "or" relationship between the associated objects. In a formula in this application, the character "/" indicates a "division" relationship between the associated objects. In addition, in this application, the word "example" is used to represent giving an example, an illustration, or a description. Any embodiment or design solution described as an "example" in this application should not be explained as being more preferred or having more advantages than another embodiment or design solution. Alternatively, this may be understood as that use of the word "example" is intended to present a concept in a specific manner, and does not constitute a limitation on this application.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes. The terms "first", "second", and the like are used to distinguish between similar objects, but do not necessarily indicate a specific order or sequence. Moreover, the terms "include", "contain" and any variant thereof are intended to cover a nonexclusive inclusion. For example, a method, system, product, or device that includes a list of steps or units is not necessarily limited to those steps or units that are expressly listed, but may include other steps or units not expressly listed or are inherent to the process, method, product, or device.

Although this application is described with reference to specific features and embodiments thereof, it is clear that various modifications and combinations may be made to them without departing from the spirit and scope of this application. Correspondingly, this specification and accompanying drawings are merely examples for description of the solutions defined by the appended claims, and are considered as any of or all modifications, variations, combinations or equivalents that cover the scope of this application.

It is clear that a person skilled in the art can make various modifications and variations to this application without departing from the spirit and the scope of the present invention. In this case, this application is intended to cover these modifications and variations of embodiments of this application provided that they fall within the scope of protection defined by the following claims of this application and their equivalent technologies.

## Claims

1. A scanning module, comprising a polyhedron reflective component, wherein the polyhedron reflective component comprises m reflective surfaces, wherein m is a positive integer;
for a first reflective surface in the m reflective surfaces, the first reflective surface comprises n reflective sub-surfaces, and an included angle between two adjacent reflective sub-surfaces is greater than 0° and less than 180°, wherein n is an even number greater than or equal to 4; and
the m reflective surfaces are adjacent in a first direction, and the n reflective sub-surfaces are adjacent in a second direction different from the first direction.

2. The scanning module according to claim 1, wherein the first direction is perpendicular to the second direction.

3. The scanning module according to claim 1 or 2, wherein the first reflective surface is any one of the m reflective surfaces.

4. The scanning module according to any one of claims 1 to 3, wherein the n reflective sub-surfaces comprise a first reflective sub-surface, a second reflective sub-surface adjacent to the first reflective sub-surface, a third reflective sub-surface adjacent to the second reflective sub-surface, and a fourth reflective sub-surface adjacent to the third reflective sub-surface, and the second reflective sub-surface is parallel to the fourth reflective sub-surface, and the first reflective sub-surface is parallel to the third reflective sub-surface.

5. The scanning module according to claim 4, wherein the n reflective sub-surfaces further comprise a fifth reflective sub-surface and a sixth reflective sub-surface adjacent to the fifth reflective sub-surface, the fifth reflective sub-surface, the third reflective sub-surface, and the first reflective sub-surface are parallel to each other, and the sixth reflective sub-surface, the fourth reflective sub-surface, and the second reflective sub-surface are parallel to each other.

6. The scanning module according to any one of claims 1 to 5, wherein the n reflective sub-surfaces are formed by any one or a combination of the following:
reflective surfaces of a V-shaped reflective part;
reflective surfaces of a W-shaped reflective part; or
reflective surfaces of a sawtooth wave-shaped reflective part, wherein n is an even number greater than or equal to 6.

7. The scanning module according to claim 6, wherein the V-shaped reflective part is integrally formed; and/or
the W-shaped reflective part is integrally formed; and/or
the sawtooth wave-shaped reflective part is integrally formed.

8. The scanning module according to any one of claims 1 to 7, wherein a dividing plate is disposed in a middle of the polyhedron reflective component, and the dividing plate is configured to divide the polyhedron reflective component into two regions.

9. The scanning module according to any one of claims 1 to 8, wherein the scanning module further comprises a support; and
the m reflective surfaces are fastened around the support.

10. The scanning module according to claim 9, wherein the m reflective surfaces are adhered around the support by using adhesive.

11. A detection apparatus, comprising a transmitting module, a receiving module, and the scanning module according to any one of claims 1 to 10, wherein
the transmitting module is configured to transmit detection light;
the scanning module is configured to reflect the detection light to a detection region, and reflect an echo signal to the receiving module, wherein the echo signal is obtained by reflecting the detection light by a target in the detection region; and
the receiving module is configured to receive the echo signal, wherein the echo signal is used to determine associated information of the target.

12. The apparatus according to claim 11, wherein the transmitting module comprises a first light source assembly and a second light source assembly, and the first light source assembly and the second light source assembly are linear light sources;
the first light source assembly is configured to emit first detection light; and
the second light source assembly is configured to emit second detection light.

13. The apparatus according to claim 12, wherein the detection apparatus further comprises a light beam converging component; and
the light beam converging component is configured to converge the first detection light and the second detection light.

14. The apparatus according to claim 12 or 13, wherein the light beam converging component comprises a light beam combining prism or a refraction prism.

15. The apparatus according to any one of claims 12 to 14, wherein the transmitting module further comprises a reflective mirror; and
the reflective mirror is configured to change a propagation direction of the second detection light, wherein a beam waist of the second detection light whose propagation direction is changed overlaps a beam waist of the first detection light at a first position.

16. The apparatus according to claim 11, wherein the transmitting module comprises a third light source assembly, and the third light source assembly is a point light source.

17. The apparatus according to any one of claims 11 to 16, wherein the transmitting module further comprises at least one collimating component, and one collimating component corresponds to one light source assembly.

18. A terminal device, comprising a control apparatus and the detection apparatus according to any one of claims 11 to 17, wherein
the control apparatus is configured to receive the associated information of the target from the detection apparatus, and plan a driving route based on the associated information of the target; or
configured to receive the echo signal from the detection apparatus, and determine the associated information of the target based on the echo signal.
